# EUROPÄISCHE PATENTSCHRIFT

(11) **EP 1 611 209 B1**
(45) Veröffentlichungstag und Bekanntmachung des Hinweises auf die Patenterteilung: **23.12.2009**
(21) Anmeldenummer: 04722241.9
(22) Anmeldetag: 22.03.2004
(51) Int. Cl.: C09C 1/00

(54) **OBERFLÄCHENMODIFIZIERTE EFFEKTPIGMENTE**
SURFACE-MODIFIED EFFECT PIGMENTS
PIGMENTS A EFFET A MODIFICATION DE SURFACE

(30) Priorität: 15.04.2003 US 462707 P
(43) Veröffentlichungstag der Anmeldung: 04.01.2006
(73) Patentinhaber: Merck Patent GmbH, 64293 Darmstadt (DE)
(72) Erfinder: RUEGER, Reinhold, 63322 Rödermark (DE); KAVIRATNA, Padma, Pooler, GA 31322 (US); KUNII, Koshiro, Taira, Iwaki-shi, Fukushima-ken 970-0221 (JP); SCHOENEFELD, Ulrich, 64404 Bickenbach (DE)
(86) Internationale Anmeldenummer: PCT/EP2004/002976
(87) Internationale Veröffentlichungsnummer: WO 2004/092284

(56) Entgegenhaltungen:
- EP-A- 0 644 242
- EP-A- 0 757 085
- WO-A-99/57204

## Beschreibung

Die vorliegende Erfindung betrifft oberflächenmodifizierte Effektpigmente mit verbesserten anwendungstechnischen Eigenschaften auf der Basis eines Substrates, wobei auf dem Substrat eine oder mehrere calcinierte Oxidschichten sowie eine organische Beschichtung aufgebracht sind, Verfahren zu ihrer Herstellung und deren Verwendung.

Kunststoffteile und Lackschichten für Außenanwendungen sind oft über längere Zeit extremen Witterungsverhältnissen und langanhaltender intensiver Lichteinwirkung ausgesetzt, was zu einer Alterung der Materialien führt. Dies äußert sich in Verfärbungen, Versprödung sowie verminderter mechanischer und chemischer Stabilität. Ursachen hierfür sind oxidative oder photolytische Zersetzungen der Bindemittel oder Zersetzungen durch die Einwirkung von Wasser in flüssiger Form oder Wasserdampf. Darüber hinaus können auch die eingesetzten Pigmente, insbesondere Perlglanzpigmente enthaltend Titanoxidschichten, die Beständigkeit der Applikationsmedien gegenüber Licht- und Witterungseinflüssen verschlechtern. Der Grund dafür liegt in der Photoaktivität der Titandioxidschicht, die die photolytische Zersetzung der organischen Bestandteile des Applikationsmediums beschleunigt.

Um diese Alterungsprozesse zu hemmen, werden Formulierungen für Außenanwendungen Stabilisatoren, z. B. UV-Licht absorbierende Stoffe, zugesetzt. Zusätzlich können die Pigmente mit weiteren anorganischen Schichten versehen werden.

So beschreibt die EP 0 644 242 Polyolefinzusammensetzungen mit Titandioxid beschichteten Glimmerteilchen, die mit einer oder mehreren Schichten aus SiO₂ und Al₂O₃ beschichtet und calciniert sind. Darüber hinaus enthält die Zusammensetzung ein Antioxidans, um die Vergilbung zu verhindern.

Neben der Photostabilität gibt es bei der Verwendung von Effektpigmenten noch weitere anwendungstechnische Nachteile. So sind unbehandelte Perlglanzpigmente in manchen Applikationsmedien nur schlecht dispergierbar, bzw. neigen zur Agglomeration und zur Bildung von Stapeln. Die Agglomerate lassen sich nur schwer redispergieren, wobei die erforderlichen Scherkräfte zu einer Zerstörung der dünnen Plättchen führen können. Ein weiteres Problem bei der Anwendung oxidischer Perlglanzpigmente in Lackschichten ist die verminderte Schwitzwasserbeständigkeit. Das in die organische Phase der Lackschicht eingebettete Perlglanzpigment verfügt über eine polare oxidische Oberfläche, an die Wassermoleküle angelagert werden können. In eine solche Schicht eindiffundierender Wasserdampf reichert sich an der Phasengrenze an und führt zu einem Aufquellen der Grenzschicht. Daraus resultiert eine Haftungsverlust zwischen den Partikeln und der Bindemittelmatrix, was zu einer Ablösung der Lackschicht führen kann.

Zur Verbesserung der Dispergierbarkeit können die Pigmente mit Oberflächenmodifizierungsmitteln beschichtet werden. So beschreibt die WO 99/57204 den Einsatz reaktiver Oberflächenmodifizierungsmittel zur Herstellung von Pigmenten, die eine gute Orientierung und Verteilung im Lack zeigen. Die so erhaltenen Pigmente erweisen sich aber als nachteilig bezüglich der Photostabilität.

In der WO 98/13426 wird die Umsetzung frisch gefällter oxidischer Deckschichten auf Perlglanzpigmenten mit speziellen Silanen beschrieben. Die Bedingungen der Nachbeschichtung sind so gewählt, dass stets frisch gefälltes Oxidhydrat mit den Organosilanen umgesetzt wird oder sogar eine Mischfällung der Metalloxidhydrate mit den Organosilanen erfolgt. Im Falle von mit Hydroxiden bzw. Oxidhydraten beschichteten Pigmenten kann es bei der Verarbeitung in Kunststoffen zur Freisetzung von Wasser kommen, die einen unerwünschten Abbau der Polymerketten initiiert.

Es bestand daher die Aufgabe, oberflächenmodifizierte Effektpigmente auf der Basis von Substraten zu finden, die eine hohe Schwitzwasser- und Lichtbeständigkeit aufweisen. Gleichzeitig sollen die Pigmente für die Verwendung in Kunststoffteilen und Folien geeignet sein und sowohl in wässrigen als auch in nichtwässrigen Medien leicht dispergierbar sein.

Diese Aufgabe wird gemäß der vorliegenden Erfindung gelöst durch ein oberflächenmodifiziertes Effektpigment auf der Basis eines Substrates, wobei auf dem Substrat eine oder mehrere calcinierte Oxidschichten sowie eine organische Beschichtung aufgebracht sind.

Als Substrate für die vorliegende Erfindung eignen sich zum Beispiel alle bekannten plättchenförmige Träger wie synthetischer oder natürlicher Glimmer, Glasplättchen, Metallplättchen, plättchenförmiges SiO₂, TiO₂ Al₂O₃, oder plättchenförmiges Eisenoxid. Die Metallplättchen können unter anderem aus Aluminium, Titan, Bronze, Stahl oder Silber bestehen, vorzugsweise aus Aluminium und/oder Titan. Die Metallplättchen können dabei durch entsprechende Behandlung passiviert sein. In einer bevorzugten Ausführungsform kann der Träger mit einer oder mehreren transparenten, semitransparenten und/oder opaken Schichten enthaltend Metalloxide, Metalloxidhydrate, Metallsuboxide, Metalle, Metallfluoride, Metallnitride, Metalloxynitride oder Mischungen dieser Materialien beschichtet sein. Die Metalloxid-, Metalloxidhydrat-, Metallsuboxid-, Metall-, Metallfluorid-, Metallnitrid-, Metalloxynitridschichten oder die Mischungen hieraus können niedrig- (Brechzahl < 1.8) oder hochbrechend (Brechzahl ≥ 1.8) sein. Als Metalloxide und Metalloxidhydrate eignen sich alle dem Fachmann bekannten Metalloxide oder Metalloxidhydrate, wie z. B. Aluminiumoxid, Aluminiumoxidhydrat, Siliziumoxid, Siliziumoxidhydrat, Eisenoxid, Zinnoxid, Ceroxid, Zinkoxid, Zirkoniumoxid, Chromoxid, Titanoxid, insbesondere Titandioxid, Titanoxidhydrat sowie Mischungen hieraus, wie z.B. Ilmenit oder Pseudobrookit. Als Metallsuboxide können beispielsweise die Titansuboxide eingesetzt werden. Als Metalle eignen sich z.B. Chrom, Aluminium, Nickel, Silber, Gold, Titan, Kupfer oder Legierungen, als Metallfluorid eignet sich beispielsweise Magnesiumfluorid. Als Metallnitride oder Metalloxynitride können beispielsweise die Nitride oder Oxynitride der Metalle Titan, Zirkonium und/oder Tantal eingesetzt werden. Bevorzugt werden Metalloxid-, Metall-, Metallfluorid und/oder Metalloxidhydratschichten und ganz besonders bevorzugt Metalloxid- und/oder Metalloxidhydratschichten auf den Träger aufgebracht. Weiterhin können auch Mehrschichtaufbauten aus hoch- und niedrigbrechenden Metalloxid-, Metalloxidhydrat-, Metall- oder Metallfluoridschichten vorliegen, wobei sich vorzugsweise hoch- und niedrigbrechende Schichten abwechseln. Insbesondere bevorzugt sind Schichtpakete aus einer hoch- und einer niedrigbrechenden Schicht, wobei auf dem Träger eines oder mehrere dieser Schichtpakete aufgebracht sein können. Die Reihenfolge der hoch- und niedrigbrechenden Schichten kann dabei an den Träger angepasst werden, um den Träger in den Mehrschichtaufbau mit einzubeziehen. In einer weiteren Ausführungsform können die Metalloxid-, Metalloxidhydrat-, Metallsuboxid-, Metall-, Metallfluorid-, Metallnitrid-, Metalloxynitridschichten mit Farbmitteln oder anderen Elementen versetzt oder dotiert sein. Als Farbmittel oder andere Elemente eignen sich beispielsweise organische oder anorganische Farbpigmente wie farbige Metalloxide, z.B. Magnetit, Chromoxid oder Farbpigmente wie z.B. Berliner Blau, Ultramarin, Bismutvanadat, Thenards Blau, oder aber organische Farbpigmente wie z.B. Indigo, Azopigmente, Phthalocyanine oder auch Karminrot oder Elemente wie z.B. Yttrium oder Antimon. Effektpigmente enthaltend diese Schichten zeigen eine hohe Farbenvielfalt in bezug auf ihre Körperfarbe und können in vielen Fällen eine winkelabhängige Änderung der Farbe (Farbflop) durch Interferenz zeigen.

Die äußere Schicht auf dem Träger ist in einer bevorzugten Ausführungsform ein hochbrechendes Metalloxid. Diese äußere Schicht kann zusätzlich auf den oben genannten Schichtpaketen oder bei hochbrechenden Trägern Teil eines Schichtpaketes sein und z.B. aus TiO₂ Titansuboxiden, Fe₂O₃, SnO₂, ZnO, ZrO₂, Ce₂O₃, CoO, Co₃O₄, V₂O₅, Cr₂O₃ und/oder Mischungen davon, wie zum Beispiel Ilmenit oder Pseudobrookit, bestehen. TiO₂ ist besonders bevorzugt.

Beispiele und Ausführungsformen der oben genannten Materialien und Pigmentaufbauten finden sich z.B. auch in den Research Disclosures RD 471001 und RD 472005.

Die Dicke der Metalloxid-, Metalloxidhydrat-, Metallsuboxid-, Metall-, Metallfiuorid-, Metallnitrid-, Metalloxynitridschichten oder einer Mischung daraus beträgt üblicherweise 3 bis 300 nm und im Falle der Metalloxid-, Metalloxidhydrat-, Metallsuboxid-, Metallfluorid-, Metallnitrid-, Metalloxynitridschichten oder einer Mischung daraus vorzugsweise 20 bis 200 nm. Die Dicke der Metallschichten beträgt vorzugsweise 4 bis 50 nm.

Darüber hinaus ist auch die Verwendung anderer Substrate, wie z. B. sphärischer Partikel oder nadelförmiger Substrate, die mit den oben genannten Schichten belegt sein können, in der erfindungsgemäßen Nachbeschichtung möglich.

Für die Oxidschicht bzw. Oxidschichten, die auf das Substrat aufgebracht werden, eignen sich die Oxide von Al, Si, Zr, Ce, Zn, Fe und/oder Mischungen hieraus, vorzugsweise werden A₂O₃, Ce₂O₃, ZnO, ZrO₂ und/oder SiO₂ eingesetzt. Schichten dieser Oxide zeichnen sich durch hohe Transparenz, fehlende oder geringe Eigenfarbe und hohen Glanz aus, so dass die coloristischen Eigenschaften der Substrate nicht verändert werden. Weiterhin ergeben diese Materialien nach dem Calcinieren wasserfreie und chemisch inerte Oberflächen.

Die auf der calcinierten Oxidschicht aufgebrachte organische Beschichtung agiert als Kupplungsreagenz und kann aus Organosilanen, -aluminaten, -titanaten und/oder zirkonaten der allgemeinen Formel

X₄₋ₙ₋ₘZ-Rₙ(-B-Y)ₘ

mit X = OH, Halogen, Alkoxy, Aryloxy
Z = Si, Al, Ti, Zr
R = Alkyl, Phenyl oder Wasserstoff
B = organische, zumindest bifunktionelle Gruppe (Alkylen, Alkylenoxyalkylen)
Y = Amino-, substituierte Amino-, Hydroxy-, Hydroxyalkyl-, Siloxan-, Acetoxy, Isocyanat-, Vinyl-, Acryloyl-, Epoxy-, Epoxypropyloxy-, Imidazol- oder Ureidogruppe
n, m = 0,1,2,3 mit n+m ≤ 3 bestehen.

Die Kupplungsreagenzien bestehen aus einer Ankergruppe (X₄₋ₙ₋ₘZ), die an die Oberfläche bindet, wenigstens einer hydrophoben Gruppe (R,B) sowie einer oder mehrerer funktioneller Gruppe (Y). Vorzugsweise handelt es sich bei den Kupplungsreagenzien um Verbindungen mit Z = Si. Bevorzugt besteht die Ankergruppe aus Alkoxysilanen, die durch hydrolytische Reaktionsbedingungen in entsprechende Hydroxygruppen überführt werden können. Letztere können an die calcinierte Metalloxidoberfläche binden und die Verankerung über Sauerstoffbrücken bewirken. Darüber hinaus können auch Mischungen verschiedener Kupplungsreagenzien eingesetzt werden, die als Mischung oder einzeln aufgebracht werden können.

Durch die Wahl geeigneter funktioneller Gruppen kann die organische Beschichtung dem Einsatzmedium angepasst werden, Darüber hinaus können durch Reaktion der funktionellen Gruppen mit entsprechenden Funktionalitäten in den Applikationsmedien zusätzliche Bindungen zwischen Pigment und Medium über das Kupplungsreagenz erzeugt werden. In einer besonderen Ausführungsform wird die Oberfläche der erfindungsgemäßen Pigmente mit einer dem Einsatzmedium angepassten Kombination von organischen Funktionalitäten modifiziert. Hierzu eignet sich auch der Einsatz von Mischungen verschiedener Kupplungsreagenzien innerhalb der organischen Beschichtung. Die Hydrophobie der Pigmentoberfläche kann durch Integration von alkylhaltigen Kupplungsreagenzien wie z. B. Alkylsilanen angepasst werden. Neben den Organosilanen ist auch der Einsatz ihrer Hydrolysate bevorzugt, die ebenfalls alleinig oder in Kombination mit Silanen, Zirkonaten, Aluminaten, Zirkonaluminaten und/oder Carboxyzirkonaluminaten als organische Beschichtung eingesetzt werden können. Im besonderen bevorzugt ist eine organische Beschichtung mit Mischungen verschiedener Kupplungsreagenzien, insbesondere mit voneinander unterschiedlichen funktionellen Gruppen Y, die eine besondere Anwendungsbreite gewährleistet.

Beispiele für Organosilane sind Propyltrimethoxysilan, Propyltriethoxysilan, Isobutyltrimethoxysifan, n-Octyltrimethoxysilan, i-Octyltrimethoxysilan, n-Octyltriethoxysilan, n-Decyltrimethoxysilan, Dodecyltrimethoxysilan, Hexadecyltrimethoxysilan, Vinyltrimethoxysilan, vorzugsweise n-Octyltrimethoxysilan und n-Octyltriethoxysilan. Als oligomere, alkoholfreie Organosilanhydrolysate eignen sich unter anderem die unter dem Handelsnamen "Dynasylan^{®}" von der Fa. Sivento vertriebenen Produkte, wie z. B. Dynasylan HS 2926, Dynasylan HS 2909, Dynasylan HS2907, Dynasylan HS 2781, Dynasylan HS 2776, Dynasylan HS 2627. Darüber hinaus eignet sich oligomeres Vinylsilan als auch Aminosilanhydrolysat als organische Beschichtung. Funktionalisierte Organosilane sind beispielsweise 3-Aminopropyltrimethoxysilan, 3-Methacryloxytrimethoxysilan, 3-Glycidyloxypropyltrimethoxysilan, beta-(3,4-Epoxycyclohexyl)-ethyltrimethoxysilan, gamma-Isocyanätopropyltrimethoxysilan, 1,3-bis(3-glycidoxypropyl)-1,1,3,3,-tetramethyldisiloxan, Ureidopropyltriethoxysilan, bevorzugt sind 3-Aminopropyltrimethoxysilan, 3-Methacryloxytrimethoxysilan, 3-Glycidyloxypropyltrimethoxysilan, beta-(3,4-Epoxycyclohexyl)-ethyltrimethoxysilan, gamma-Isocyanatopropyltrimethoxysilan. Beispiele für polymere Silansysteme sind in WO 98/13426 beschrieben und werden z. B. von der Fa. Sivento unter dem Warenzeichen Hydrosil^{®} vertrieben.

Die Menge der organischen Beschichtung beträgt zwischen 0.2 und 5 Gew.-%, bezogen auf das Pigment, vorzugsweise 0.5 bis 2 Gew.-%.

Weiterhin wird die Aufgabe der vorliegenden Erfindung gelöst durch ein Verfahren zur Herstellung oberflächenmodifizierter Effektpigmente, dadurch gekennzeichnet, dass ein plättchenförmiges Substrat mit einer oder mehreren Oxidschichten beschichtet wird, anschließend calciniert und eine organische Beschichtung aufgebracht wird.

Die Beschichtung mit einer oder mehreren Oxidschichten kann sowohl nasschemisch als auch über Sol-Gel-Verfahren erfolgen, vorzugsweise erfolgt die Auffällung nasschemisch. Bei nasschemischer Aufbringung erfolgt eine Beschichtung mit den entsprechenden Oxiden, Hydroxiden und/oder Oxidhydraten. Dazu werden die plättchenförmigen Substrate in einem Lösungsmittel, vorzugsweise Wasser, suspendiert und mit Lösungen der Metallsalze versetzt. Hierbei werden die Oxide, Hydroxide und/oder Oxidhydrate auf die Substrate aufgefällt. Als Ausgangsverbindungen eignen sich die entsprechenden Halogenide, Nitrate und/oder Sulfate, vorzugsweise werden die entsprechenden Halogenide und/oder Nitrate eingesetzt. Der für die Fällung des jeweiligen Materials erforderliche pH-Wert wird fachmännisch eingestellt und optimiert. Die Fällungsbedingungen, wie z. B. pH-Wert oder Temperatur können in fachmännischer Weise optimiert werden. Die Dicke der aufgefällten Schicht beträgt 0.5-20 nm, vorzugsweise 1-10 nm.

Die auf diese Weise erhaltenen Pigmente werden anschließend calciniert. Die Calcinierung kann bei Temperaturen von 250-900°C, vorzugsweise bei 600-900°C erfolgen. Durch die Calcinierung werden die aufgefällten Oxide, Hydroxide und/oder Oxidhydrate entwässert, in die entsprechenden Oxide überführt und verdichtet.

Nach der Calcinierung wird die organische Beschichtung aufgebracht. Die Aufbringung der Kupplungsreagenzien erfolgt in Lösung bei Temperaturen oberhalb von 60°C, vorzugsweise oberhalb von 70°C. Als Lösungmittel eignen sich organische Lösungmittel, Wasser oder Mischungen hieraus, bevorzugt wird Wasser verwendet. Die für die Aufbringung der organischen Beschichtung nötige Reaktionszeit liegt bei mindestens 5 Minuten, vorzugsweise erfolgt sie über einen Zeitraum von 10 bis 90 Minuten, kann aber auch beliebig verlängert werden. Das erhaltene Pigment wird nach für den Fachmann gebräuchlichen Methoden aufgearbeitet und isoliert, z. B. durch Filtration, Trocknung und Siebung.

Die erfindungsgemäßen oberflächenmodifizierten Effektpigmente zeichnen sich durch verbesserte anwendungstechnische Eigenschaften gegenüber dem Stand der Technik aus. Durch die Calcinierung werden die Oxidschichten dehydratisiert und verdichtet, was zu einer Verminderung der Porosität der Pigmentoberfläche führt. An der verdichteten Oberfläche kann weniger Wasser absorbiert werden und damit können die nachteiligen Wirkungen von in der Grenzschicht adsorbiertem Wasser im Lack vermindert werden. Durch die Calcinierung wird auch chemisch in Form von Hydroxiden oder Oxidhydraten gebundenes Wasser entfernt. Dies hat Vorteile bei der Anwendung der Pigmente in Kunststoffen, da vorhandenes Wasser in thermoplastischen Polymeren wie z. B. in Polyestern, bei höheren Temperaturen zur hydrolytischen Zersetzung des Polymers führen kann. Im Falle von mit Hydroxiden bzw. Oxidhydraten beschichteten Pigmenten kann es bei der Kunststoffverarbeitung zur Freisetzung von Wasser kommen, das den unerwünschten Abbau der Polymerketten initiiert. Bei den erfindungsgemäßen Pigmenten kann durch die Calcinierung der Oxidschicht auch bei der Verarbeitung der Pigmente in Kunststoffen kein Wasser austreten, so dass sie für diesen Anwendungsbereich besonders geeignet sind. Durch die organische Beschichtung werden die Oberflächeneigenschaften der calcinierten Oxidschichten positiv beeinflusst. Die mit der organischen Beschichtung nachbeschichteten Oberflächen sind hydrophober und weniger polar als die unbehandelten Oxidoberflächen und sind damit von Bindemitteln und organischen Lösungsmitteln besser benetzbar. Daraus resultiert eine bessere Verträglichkeit der erfindungsgemäßen Pigmente mit den bei der Anwendung verwendeten Bindemittelsystemen. Ferner hemmt die organische Beschichtung wegen ihrer sterischen Abschirmung der Pigmentoberfläche die Agglomeration der Pigmentpartikel und verbessert so deren Dispergierbarkeit.

Überraschenderweise zeigen die erfindungsgemäßen Pigmente eine gute Haftung der organischen Beschichtung auf den ansonsten chemisch resistenten oxidischen Oberflächen. Dies war nicht zu erwarten, denn die US 5, 759, 255 lehrt, dass Silankupplungsreagenzien nur auf frisch gefällten Oxidhydratschichten, z. B. hydratisiertem Al₂O₃, zu binden vermögen. Von einer Calcinierung der anorganischen Nachbeschichtung wird ausdrücklich abgeraten.

Aufgrund der verbesserten anwendungstechnischen Eigenschaften eignen sich die hier beschriebenen oberflächenmodifizierten Effektpigmente für eine Vielzahl von Anwendungen. Gegenstand der Erfindung ist damit weiterhin die Verwendung der erfindungsgemäßen oberflächenmodifizierten Effektpigmente zur Pigmentierung von Kosmetika, Lacken, Farben, Druckfarben, Kunststoffen, Folien, in Sicherheitsanwendungen, zur Lasermarkierung, im Wärmeschutz oder zur Saatguteinfärbung. Die Einarbeitung der Pigmente in die jeweiligen Applikationsmedien kann nach allen dem Fachmann bekannten Verfahren erfolgen.
Druckfarben enthaltend Pigmente gemäß der vorliegenden Erfindung eignen sich für alle bekannten Druckverfahren, wie z. B. Siebdruck, Flexodruck, Tiefdruck oder Offsetdruck. Bevorzugt eingesetzt werden die erfindungsgemäßen Pigmente in Lacken wie z. B. in Autolacken oder Wasserlacken, die aufgrund der besonderen Stabilität der Pigmente für alle Innen- und Außenanwendungen geeignet sind. Alle dem Fachmann bekannten Kunststoffe und Folien können vorteilhaft mit Pigmenten gemäß der vorliegenden Erfindung pigmentiert werden, wobei die Einbindung der Pigmente sowohl rein physikalisch durch Mischung als auch chemisch durch Reaktion entsprechender funktioneller Gruppe in der organischen Beschichtung mit dem Kunststoff erfolgen kann.

Die erfindungsgemäßen Effektpigmente eignen sich ebenso zur Verwendung in Abmischungen mit organischen Farbstoffen und/oder Pigmenten, wie z.B. transparenten und deckenden Weiß-, Bunt- und Schwarzpigmenten sowie mit plättchenförmigen Eisenoxiden, organischen Pigmenten, holographischen Pigmenten, LCPs (Liquid Crystal Polymers) und herkömmlichen transparenten, bunten und schwarzen Glanzpigmenten auf der Basis von metalloxidbeschichteten Plättchen auf Basis von Glimmer, Glas, Al₂O₃, Fe₂O₃, SiO₂, etc. Die erfindungsgemäßen Effektpigmente können in jedem Verhältnis mit handelsüblichen Pigmenten und Füllern gemischt werden.

Als Füllstoffe sind z.B. natürlicher und synthetischer Glimmer, Nylon Powder, reine oder gefüllte Melaninharze, Talcum, Gläser, Kaolin, Oxide oder Hydroxide von Aluminium, Magnesium, Calcium, Zink, BiOCl, Bariumsulfat, Calciumsulfat, Calciumcarbonat, Magnesiumcarbonat, Kohlenstoff, sowie physikalische oder chemische Kombinationen dieser Stoffe zu nennen. Bezüglich der Partikelform des Füllstoffes gibt es keine Einschränkungen. Sie kann den Anforderungen gemäß z.B. plättchenförmig, sphärisch oder nadelförmig sein.

Die nachfolgenden Beispiele sollen die Erfindung näher erläutern, ohne sie jedoch zu begrenzen.

### Beispiele:

### Beispiel 1

100 g Glimmerplättchen mit einer Teilchengröße von 10-50 µm werden in 1 I Wasser suspendiert und unter Rühren auf 75°C erhitzt. Zu der Suspension wird eine wässrige 42%ige Lösung von 55 g TiCl₄ innerhalb 3 Stunden zudosiert, wobei der pH-Wert durch Zugabe von verdünnter Natronlauge auf 2.2 gehalten wird. Anschließend wird 30 min nachgerührt.

Das entstandene Zwischenprodukt enthält ca. 29% Titandioxid (als Hydrat) bezogen auf den Glimmeranteil.

Die Suspension kann zum gewünschten Basispigment aufgearbeitet, d.h. gewaschen, getrocknet, bei 600 bis 900°C calciniert und anschließend gesiebt werden. Das Pigment wird daraufhin wieder in Wasser suspendiert und unter Rühren auf die o.a. Temperatur aufgeheizt. Alternativ kann der anorganische Nachbeschichtungsteil direkt in der Muttersuspension aufgebracht werden.
Die o.a. Suspension oder 129 g calciniertes Basispigment in 1.3 I Wasser wird unter kräftigem Rühren auf 75°C aufgeheizt, der pH-Wert mit NaOH auf 6.0 eingestellt und 122 ml einer Aluminiumchlorid*6 H₂O-Lösung (10 g/l) innerhalb 2 Stunden zudosiert. Mit Natronlauge wird dabei der pH-Wert konstant gehalten. Im Anschluss wird mindestens 30 Minuten nachgerührt.

Das nachbeschichtete Pigment wird durch Filtration vom Überstand abgetrennt und gewaschen. Nach Trocknung bei 100 bis 150°C wird das Pigment 30 min bei 750°C calciniert und entsprechend der gewünschten Korngröße gesiebt.
Das erhaltene silberfarbige Pigment enthält eine Beschichtung mit 2% Aluminiumoxid.

### Organische Nachbehandlung:

100 g des vorbehandelten Pigments werden in 1 I Wasser suspendiert, der Ansatz auf 75°C aufgeheizt und der pH-Wert mit Salzsäure oder Natronlauge auf 8.0 eingestellt. Jeweils 2 g der Silane Dynasylan^{®} AMMO, MEMO und GLYMO werden innerhalb 10 bis 20 Minuten zugegeben und der Ansatz anschließend 60 Minuten nachgerührt. Das nachbeschichtete Pigment wird durch Filtration vom Überstand abgetrennt und gewaschen. Nach Trocknung bei 120 bis 160°C wird das Pigment auf eine Korngröße kleiner 40 µm gesiebt.

### Beispiel 2

100 g Glimmerplättchen mit einer Teilchengröße von 10-50 µm werden in 1 I Wasser suspendiert und unter Rühren auf 75°C erhitzt. Zu der Suspension wird eine wässrige 10%ige Lösung von 3.35 g SnCl₄ innerhalb einer Stunde zudosiert, wobei der pH-Wert durch Zugabe von verdünnter Natronlauge auf 1.8 gehalten wird. Nach einer Nachrührzeit von 30 Minuten wird eine wässrige 42%ige Lösung von 237 g TiCl₄ innerhalb 12 Stunden zudosiert, wobei der pH-Wert durch Zugabe von verdünnter Natronlauge auf 1.8 gehalten wird. Anschließend wird 30 min nachgerührt. Das entstandene Zwischenprodukt enthält ca. 2% Zinnoxid und 100% Titandioxid (als Hydrat) bezogen auf den Glimmeranteil.

Die Suspension kann zum gewünschten Basispigment aufgearbeitet, d.h. gewaschen, getrocknet, bei 600 bis 900°C calciniert und anschließend gesiebt werden. Das Pigment wird daraufhin wieder in Wasser suspendiert und unter Rühren auf die o.a. Temperatur aufgeheizt. Alternativ kann der anorganische Nachbeschichtungsteil direkt in der Muttersuspension aufgebracht werden.

Die o.a. Suspension oder 200 g calciniertes Basispigment in 2.2 L Wasser werden unter Rühren auf 75°C aufgeheizt und der pH-Wert mit Natronlauge oder Salzsäure auf 3.0 eingestellt. Innerhalb 30 Minuten werden 10%ige Lösungen von 2.3 g CeCl₃ * 7 H₂O und 18.9 g AlCl₃ * 6 H₂O nacheinander zudosiert. Mit Natronlauge wird dabei der pH-Wert konstant gehalten. Nach einer Nachrührzeit von 30 Minuten wird der pH-Wert innerhalb 60 Minuten auf 5 eingestellt und danach weitere 30 Minuten nachgerührt.
Das nachbeschichtete Pigment wird durch Filtration vom Überstand abgetrennt und gewaschen. Nach Trocknung bei 100 bis 150°C wird das Pigment 45 min bei 750°C calciniert und entsprechend der gewünschten Korngröße gesiebt.

Das erhaltene Pigment enthält eine Beschichtung von 0.5% Ceroxid und 2% Aluminiumoxid.

### Organische Nachbehandlung:

100 g des vorbehandelten Pigments werden in 1 I Wasser suspendiert, der Ansatz auf 75°C aufgeheizt und der pH-Wert mit Salzsäure oder Natronlauge auf 8.0 eingestellt. Jeweils 2 g der Silane Dynasylan^{®} AMMO, MEMO und GLYMO werden innerhalb 10 bis 20 Minuten zugegeben und anschließend 60 Minuten nachgerührt. Das nachbeschichtete Pigment wird durch Filtration vom Überstand abgetrennt und gewaschen. Nach Trocknung bei 120 bis 160°C wird das Pigment auf eine Korngröße kleiner 40 µm gesiebt.

### Beispiel 3

Die nach Beispiel 2 hergestellte Suspension oder 200 g calciniertes Basispigment in 2.2 L Wasser wird unter Rühren auf 75°C aufgeheizt und der pH-Wert mit Natronlauge oder Salzsäure auf 3.0 eingestellt. Innerhalb 2 Stunden wird eine 10%ige Lösung von 15.7 g ZrOCl₂ * 8 H₂O unter kräftigem Rühren zudosiert, wobei der pH-Wert mit Natronlauge konstant gehalten wird. Anschließend wird der pH-Wert innerhalb von 60 Minuten auf 5.0 eingestellt und danach weitere 30 Minuten nachgerührt.

Das nachbeschichtete Pigment wird durch Filtration vom Überstand abgetrennt und gewaschen. Nach Trocknung bei 100 bis 150°C wird das Pigment 45 min bei 750°C calciniert und entsprechend der gewünschten Korngröße gesiebt.
Das erhaltene Pigment enthält eine Beschichtung von 3% Zirkoniumoxid.

### Organische Nachbehandlung

100 g des vorbehandelten Pigments werden in 1 I Wasser suspendiert, der Ansatz auf 75°C aufgeheizt und der pH-Wert mit Salzsäure oder Natronlauge auf 3.0 eingestellt. 20 ml einer 20%igen Lösung von Dynasylan^{®} HS 2929 werden innerhalb 10 bis 20 Minuten zugegeben und anschließend 30 Minuten nachgerührt. Der pH-Wert wird anschließend mit Natronlauge innerhalb 60 Minuten auf 7.0 gestellt. Das nachbeschichtete Pigment wird durch Filtration vom Überstand abgetrennt und gewaschen. Nach Trocknung bei 120 bis 160°C wird das Pigment auf eine Korngröße kleiner 40 µm gesiebt.

### Beispiel 4

100 g mit Rutil beschichtete Siliciumdioxid-Blättchen (Colorstream^{®} Viola Fantasy) werden in 1 I Wasser unter Rühren auf 75°C aufgeheizt und der pH-Wert mit Salzsäure auf 4.5 eingestellt. Innerhalb 2 Stunden wird eine 10%ige Lösung von 26.1 g Al₂(SO₄)₃ * 18 H₂O unter kräftigem Rühren zudosiert, wobei der pH-Wert mit Natronlauge konstant gehalten wird. Anschließend wird der pH-Wert innerhalb von 30 Minuten auf 6.5 eingestellt und weitere 30 Minuten nachgerührt.

Das nachbeschichtete Pigment wird durch Filtration vom Überstand abgetrennt und gewaschen. Nach Trocknung bei 100 bis 150°C wird das Pigment 45 min bei 750°C calciniert und entsprechend der gewünschten Korngröße gesiebt.
Das erhaltene Pigment enthält eine Beschichtung von 3% Aluminiumoxid.

### Organische Nachbehandlung

500 g des vorbehandelten Pigments werden in einem heizbaren Mischer mit 50 ml einer 10%igen Lösung von Dynasylan^{®} HS 2926 gleichmäßig benetzt. Anschließend wird unter Mischen 2 Stunden Erwärmung auf 80°C erwärmt. Das nachbeschichtete Pigment nach Abkühlung auf Raumtemperatur auf eine Korngröße kleiner 40 µm gesiebt.

### Beispiel 5

100 g mit Rutil beschichtete Aluminiumoxid-Blättchen (Xirallic^{®} Sunbeam Gold) werden in 1 I Wasser unter Rühren auf 75°C aufgeheizt, der pH-Wert mit Salzsäure auf 2.0 eingestellt und 9.5 g AlCl₃ * 6 H₂O in der Suspension aufgelöst. Innerhalb 10 Minuten wird 7 g TEOS (Tetraethoxysilan) zugegeben, 30 Minuten nachgerührt und dann der pH-Wert innerhalb von 60 Minuten auf 6.5 eingestellt.

Nach einer Nachrührzeit von 30 Minuten wird das nachbeschichtete Pigment durch Filtration vom Überstand abgetrennt und gewaschen. Nach Trocknung bei 100 bis 150°C wird das Pigment 45 Minuten bei 750°C calciniert und entsprechend der gewünschten Korngröße gesiebt.
Das erhaltene Pigment enthält eine Beschichtung von 2% Siliciumdioxid und 2% Aluminiumoxid.

### Organische Nachbehandlung

100 g des vorbehandelten Pigments werden in 1 I Wasser suspendiert, der Ansatz auf 75°C aufgeheizt und der pH-Wert mit Salzsäure oder Natronlauge auf 8.0 eingestellt. Jeweils 1.5 g Dynasylan^{®} AMMO, MEMO GLYMO werden innerhalb 10 bis 20 Minuten zugegeben. Nach einer ersten Nachrührzeit von 30 Minuten wird 0.5 g n-Octyltrimethoxysilan zugegeben und weitere 30 Minuten nachgerührt. Das nachbeschichtete Pigment wird durch Filtration vom Überstand abgetrennt und gewaschen. Nach Trocknung bei 120 bis 160°C wird das Pigment auf eine Korngröße kleiner 40 µm gesiebt.

### Beispiel 6

100 g frisch mit Rutil beschichtete Glasplättchen mit einer Substrat-Dicke von unter 1 µm und einem Rutilgehalt von 20%, bezogen auf das Pigment, werden in ca. 1.5 I Wasser unter Rühren auf 75°C aufgeheizt und der pH-Wert mit Natronlauge auf 9.0 eingestellt. Innerhalb 2 Stunden werden 100 ml einer Natriumwasserglaslösung mit einem Kieselsäuregehalt von 5% zugegeben, wobei der pH-Wert mittels 2.5%iger Schwefelsäure konstant gehalten wird. Anschließend wird 30 Minuten nachgerührt und dann der pH-Wert mit Schwefelsäure innerhalb von 30 Minuten auf 7.5 gestellt.

Nach einer Nachrührzeit von 30 Minuten wird das nachbeschichtete Pigment durch Filtration vom Überstand abgetrennt und gewaschen. Nach Trocknung bei 100 bis 150°C wird das Pigment 45 Minuten bei 700°C calciniert und entsprechend der gewünschten Korngröße gesiebt.
Das erhaltene Pigment enthält eine Beschichtung von 5% Siliciumdioxid.

### Organische Nachbehandlung:

100 g des vorbehandelten Pigments werden in 1 I Wasser suspendiert, der Ansatz auf 75°C aufgeheizt und der pH-Wert mit Salzsäure oder Natronlauge auf 8.0 eingestellt. Jeweils 2 g der Silane Dynasylan^{®} AMMO und GLYMO werden innerhalb 10 bis 20 Minuten zugegeben und 30 Minuten nachgerührt. Anschließend wird 2 g Manchem C (Carboxyzirconiumaluminat von Rhone-Poulenc Chemicals) zugegeben und weitere 30 Minuten nachgerührt. Das nachbeschichtete Pigment wird durch Filtration vom Überstand abgetrennt und gewaschen. Nach Trocknung bei 120 bis 160°C wird das Pigment auf eine Korngröße kleiner 40 µm gesiebt.

### Vergleichsbeispiel 1

100 g des in Beispiel 1 beschriebenen uncalcinierten Basispigments ohne Aluminiumoxid-Beschichtung werden in 1 I Wasser suspendiert, der Ansatz auf 75°C aufgeheizt und der pH-Wert mit Salzsäure oder Natronlauge auf 8.0 eingestellt. Jeweils 2 g der Silane Dynasylan^{®} AMMO, MEMO und GLYMO werden innerhalb 10 bis 20 Minuten zugegeben und anschließend 60 Minuten nachgerührt. Das nachbeschichtete Pigment wird durch Filtration vom Überstand abgetrennt und gewaschen. Nach Trocknung bei 120 bis 160°C wird das Pigment auf eine Korngröße kleiner 40 µm gesiebt.

### Vergleichsbeispiel 2: [Eckart WO 99/57204 Beispiel 10]

100 g Iriodin^{®} 103 werden in 500 ml Ethanol 10 min gerührt. Die Suspension wird auf 80°C erwärmt und mit einer Lösung von 26 ml 1N Kalilauge versetzt. Nach weiteren 5 Minuten wird 1 g 3-Methacryloxypropyltrimethoxysilan (MEMO) zu der Mischung gegeben. 30 min später werden zu der Mischung 2 g Trimethylolpropantrimethacrylat gegeben, unmittelbar gefolgt von 30 mg α,α'-Azoisobutyronitril. Der gesamte Ansatz rührt noch weitere 4 h bei 80°C. Dann läßt man die Mischung abkühlen und saugt das fertig beschichtete Pigment ab. Schließlich wird der Filterkuchen bei 90°C im Vakuum getrocknet.

Nach den folgenden Prüfmethoden wurden die erfindungsgemäßen Pigmente sowie die Pigmenten aus den Vergleichsbeispielen untersucht:

### Photoaktivität:

Die Pigmentproben werden in eine Kunststoffmatrix eingearbeitet und der Umfang der Reduktion von Pb²⁺ zu Pb visuell bestimmt. Die Beurteilung der Graufärbung erfolgt nach ISO 105-Part A 02 (entspricht DIN 54 001). Die Prüfskala reicht von 5 (sehr gut) bis 1 (sehr schlecht).

### Kondenswasserprüfung:

Die Pigmentproben werden in ein Wasserbasislacksystem eingearbeitet und die Prüfproben per Spritzapplikation hergestellt.
Die Prüfung erfolgte nach DIN 50 017 (Kondenswasserklimate) 1 Stunde und 4 Stunden nach Belastungsende. Prüfparameter sind die Haftung (Gitterschnitt, Prüfskala von 0 (sehr gut) bis 5 (sehr schlecht)) und die Abbildungsschärfe (DOI, Prüfskala von 10 (sehr gut) bis 0 (sehr schlecht)).

### Ergebnisse des Photostabilitäts- und Kondenswassertests:

Die Ergebnisse der Photostabilitäts- und Kondenswassertests sind in folgender Tabelle zusammengefasst:

| **Probe** | **Photoaktivität** | **Haftung** | | **DOI** | |
|---|---|---|---|---|---|
| | | 1 h | 4h | 1 h | 4 h |
| 1 | 3 | 1 | 0 | 5 | 8 |
| 2 | 3-4 | 0 | 0 | 4 | 7 |
| 3 | 3-2 | 1 | 0 | 5 | 8 |
| 4 | 3-2 | 1 | 0 | 6 | 9 |
| 5 | 3-2 | 1 | 0 | 6 | 8 |
| 6 | 3-2 | 0 | 0 | 4 | 7 |
| V1 | 1 | 1 | 0 | 3 | 6 |
| V2 | 2-1 | 1 | 0 | 5 | 8 |

Bei den Beispielen 1, V1 und V2 handelt es sich um Silberpigmente mit verhältnismäßig geringem Titandioxid-Anteil. Diese Pigmente sind auch ohne spezielle Nachbehandlung weniger photoaktiv im Vergleich zu Interferenz-Pigmenten mit höherem Rutil-Anteil (Proben 2, 3 und 5). Es ist deutlich zu erkennen, dass durch die anorganische Nachbeschichtung eine Absenkung der Photoaktivität zu erreichen ist.

## Patentansprüche

1. Oberflächenmodifizierte Effektpigmente auf der Basis eines Substrates, **dadurch gekennzeichnet, dass** auf dem Substrat eine oder mehrere calcinierte Oxidschichten sowie eine organische Beschichtung aus Organosilanen, -aluminaten, -titanaten, -zirkonaten und/oder Mischungen hieraus aufgebracht sind.

2. Obemächenmodifizierte Effektpigmente nach Anspruch 1, **dadurch gekennzeichnet, dass** die calcinierte Oxidschicht aus den Oxiden von Al, Si, Zr, Zn, Ce, Fe oder Mischungen hieraus besteht.

3. Obertlächenmodifizierte Effektpigmente nach Anspruch 1 oder 2, **dadurch gekennzeichnet, dass** das Substrat ein plättchenförmiger Träger und/oder ein mit einer oder mehreren Metalloxid-, Metalloxidhydrat-, Metallsuboxid-, Metall-, Metallfluorid-, Metallnitrid-, Metalloxynitridschichten beschichteter plättchenförmiger Träger ist.

4. Oberflächenmodifizierte Effektpigmente nach einem der Ansprüche 1 bis 3, **dadurch gekennzeichnet, dass** die durchschnittliche Dicke der calcinierten Oxidschichten der Nachbeschichtung 0.5-20 nm beträgt.

5. Verfahren zur Herstellung eines oberflächenmodfizierten Effektpigmentes nach Anspruch 1, **dadurch gekennzeichnet, dass** auf ein Substrat eine oder mehrere Oxidschichten aufgebracht werden, anschließend calciniert und eine organische Beschichtung aus Organosilanen, -aluminaten, -titanaten, -zirkonaten und/oder Mischungen hieraus aufgebracht wird.

6. Verfahren nach Anspruch 5, **dadurch gekennzeichnet, dass** das Substrat ein plättchenförmiger Träger und/oder ein mit einer oder mehreren Metalloxid-, Metalloxidhydrat-, Metallsuboxid-, Metall-, Metallfluorid-, Metallnitrid-, Metalloxynitridschichten beschichteter plättchenförmiger Träger ist.

7. Verfahren nach Anspruch 5 oder 6, **dadurch gekennzeichnet, dass** die Aufbringung der Oxidschicht nasschemisch und/oder im Sol-Gel-Verfahren erfolgt,

8. Verfahren nach Anspruch 5, **dadurch gekennzeichnet, dass** die Calcinierung bei Temperaturen von 250 bis 900°C erfolgt.

9. Verwendung oberflächenmodifizierter Effektpigmente nach Anspruch 1 in Lacken, Farben, Druckfarben, Kunststoffen, Folien, in Sicherheitsanwendungen, zur Lasermarkierung, im Wärmeschutz oder zur Saatguteinfärbung.

## Claims

1. Surface-modified effect pigments based on a substrate, **characterised in that** one or more calcined oxide layers and an organic coating comprising organosilanes, organoaluminates, organotitanates, organozirconates and/or mixtures thereof have been applied to the substrate.

2. Surface-modified effect pigments according to Claim 1, **characterised in that** the calcined oxide layer consists of the oxides of Al, Si, Zr, Zn, Ce, Fe or mixtures thereof.

3. Surface-modified effect pigments according to Claim 1 or 2, **characterised in that** the substrate is a flake-form support and/or a flake-form support coated with one or more metal oxide, metal oxide hydrate, metal suboxide, metal, metal fluoride, metal nitride, metal oxynitride layers.

4. Surface-modified effect pigments according to one of Claims 1 to 3, **characterised in that** the average thickness of the calcined oxide layers of the post-coating is 0.5-20 nm.

5. Process for the preparation of a surface-modified effect pigment according to Claim 1, **characterised in that** one or more oxide layers are applied to a substrate, subsequently calcined, and an organic coating comprising organosilanes, organoaluminates, organotitanates, organozirconates and/or mixtures thereof is applied.

6. Process according to Claim 5, **characterised in that** the substrate is a flake-form support and/or a flake-form support coated with one or more metal oxide, metal oxide hydrate, metal suboxide, metal, metal fluoride, metal nitride, metal oxynitride layers.

7. Process according to Claim 5 or 6, **characterised in that** the oxide layer is applied by wet-chemical and/or sol-gel methods.

8. Process according to Claim 5, **characterised in that** the calcination is carried out at temperatures of 250 to 900°C.

9. Use of surface-modified effect pigments according to Claim 1 in paints, coatings, printing inks, plastics, films, in security applications, for laser marking, in thermal protection or for colouring seed.

## Revendications

1. Pigments à effet modifié en surface basés sur un substrat, **caractérisés en ce qu'**une ou plusieurs couches d'oxyde calcinées et un revêtement organique comprenant des organosilanes, des organoaluminates, des organotitanates, des organozirconates et/ou des mélanges de ceux-ci ont été appliqués au substrat.

2. Pigments à effet modifié en surface selon la revendication 1, **caractérisés en ce que** la couche d'oxyde calcinée est constituée d'oxydes d'Al, Si, Zr, Zn, Ce, Fe ou de mélanges de ceux-ci.

3. Pigments à effet modifié en surface selon la revendication 1 ou 2, **caractérisés en ce que** le substrat est un support en forme de paillette et/ou un support en forme de paillette revêtu d'une ou plusieurs couches d'oxyde métallique, d'oxyde métallique hydraté, de sous-oxyde métallique, de métal, de fluorure métallique, de nitrure métallique, d'oxynitrure métallique.

4. Pigments à effet modifié en surface selon l'une des revendications 1 à 3, **caractérisés en ce que** l'épaisseur moyenne des couches d'oxyde calcinées du post-revêtement est de 0,5-20 nm.

5. Procédé de préparation d'un pigment à effet modifié en surface selon la revendication 1, **caractérisé en ce qu'**une ou plusieurs couches d'oxyde sont appliquées à un substrat, puis calcinées, et on applique un revêtement organique comprenant des organosilanes, des organoaluminates, des organotitanates, des organozirconates et/ou des mélanges de ceux-ci.

6. Procédé selon la revendication 5, **caractérisé en ce que** le substrat est un support en forme de paillette et/ou un support en forme de paillette revêtu d'une ou plusieurs couches d'oxyde métallique, d'oxyde métallique hydraté, de sous-oxyde métallique, de métal, de fluorure métallique, de nitrure métallique, d'oxynitrure métallique.

7. Procédé selon la revendication 5 ou 6, **caractérisé en ce que** la couche d'oxyde est appliquée par des méthodes chimiques par voie humide et/ou sol-gel.

8. Procédé selon la revendication 5, **caractérisé en ce que** la calcination est effectuée à des températures allant de 250 à 900°C.

9. Utilisation de pigments à effet modifié en surface selon la revendication 1 dans des peintures, des revêtements, des encres d'impression, des plastiques, des films, dans des applications de sécurité, pour un marquage laser, en protection thermique ou pour la coloration de semences.
